# EUROPÄISCHE PATENTSCHRIFT

(11) **EP 0 790 439 B1**
(45) Veröffentlichungstag und Bekanntmachung des Hinweises auf die Patenterteilung: **02.06.1999**
(21) Anmeldenummer: 97101661.3
(22) Anmeldetag: 04.02.1997
(51) Int. Cl.: F16H 45/02

(54) **Drehmomentwandler mit Überbrückungskupplung in Konusbauform**
Torque converter with conical lock-up clutch
Convertisseur de couple avec embrayage de pontage conique

(30) Priorität: 17.02.1996 DE 19605921
(43) Veröffentlichungstag der Anmeldung: 20.08.1997
(73) Patentinhaber: Ford Global Technologies, Inc., Dearborn, Michigan 48126-2490 (US)
(72) Erfinder: Wirtz, Hans-Peter, 50769 Koeln (DE)
(74) Vertreter: Messulam, Alec Moses

(56) Entgegenhaltungen:
- DE-A- 1 900 223
- DE-A- 3 236 621
- DE-A- 4 420 959
- DE-A- 4 431 640

## Beschreibung

Die Erfindung bezieht sich auf einen Drehmomentwandler mit Überbrückungskupplung in Konusbauform, der im Oberbegriff des Patentanspruches 1 erläuterten Art.

Aus der US-A- 3 463 033 (DE-A-1 900 223), insbesondere deren Fig. 4, ist ein Drehmomentwandler mit einer Überbrückungskupplung in Konusbauform bekannt, wobei hier eine aufwendige Doppelkupplungsanordnung gezeigt ist.

Aus der DE-C- 32 36 621 ist gleichfalls ein Drehmomentwandler mit Überbrückungskupplung in Konusbauform bekannt, wobei hier eine einfachere Einfachkupplungsanordnung gezeigt ist.

Solche Drehmomentwandler mit Überbrückungskupplungen in Konusbauform sind somit seit mehr als 20 Jahren dem Fachmann geläufig und sie werden dann angewendet, wenn der durch eine Konuskupplung erzielbare Selbstverstärkungseffekt beim Einrücken der Überbrückungskupplung aus bestimmten Gründen gewünscht wird.

Die vorliegende Erfindung geht von solchen bekannten Überbrückungskupplungen in Konusbauform aus und hat sich zum Ziel gesetzt, Maßnahmen aufzuzeigen, mittels derer eine Anpassung der bei Überbrückungskupplungen in Konusbauform erzielbaren Selbstverstärkung an die jeweils für einen Einsatzzweck vorgesehene Drehmomentkapazität eines Drehmomentwandlers mit einfachen Mitteln möglich ist.

Gemäß der Erfindung wird dieses Ziel erreicht, indem bei einem Drhemomentwandler mit Überbrückungskupplung in Konusbauform gemäß dem Oberbegriff des Patentanspruches 1 die im Kennzeichenteil des Patentanspruches 1 aufgezeigten Merkmale angewendet werden.

Dadurch, daß die Innenwandung des Drehmomentwandlergehäuses zumindest zwei konzentrisch zueinander liegende Konusflächen aufweist, wobei deren radial innere Konusfläche einen geringeren Verstärkungswinkel und deren radial äußere Konusfläche einen größeren verstärkungswinkel aufweist und diese mit Kupplungsscheiben mit unterschiedlicher radialer Ausdehnung und unterschiedlich konisch abgewinkelten Reibscheibenbereichen zusammenwirken, kann unter Beibehaltung eines einheitlichen Drehmomentwandlergehäuses eine Baureihe von für unterschiedliche Drehmomentübertragungskapazitäten ausgelegten Drehmomentwandlern mit Überbrückungskupplungen in Konusbauform geschaffen werden.

Die für die Baureihe vorgesehenen Kupplungsscheiben können hierbei in ihrem Naben- und Dämpferbereich übereinstimmend ausgebildet sein und sich nur in ihren radial äußeren, konischen Reibscheibenbereichen unterscheiden.

Die Erfindung wird anhand zweier in der beiliegenden Zeichnung gezeigter Ausführungsbeispiele näher erläutert. Es zeigt:
- Fig. 1: die obere Hälfte eines erfindungsgemäßen Drehmomentwandlers mit einer Überbrückungskupplung in Konusbauform und
- Fig. 2: die untere Hälfte eines erfindungsgemäßen Drehmomentwandlers mit einer Überbrückungskupplung in Konusbauform, wobei hier eine radial vergrößerte Kupplungsscheibe mit einer höheren Drehmomentkapazität vorgesehen ist.

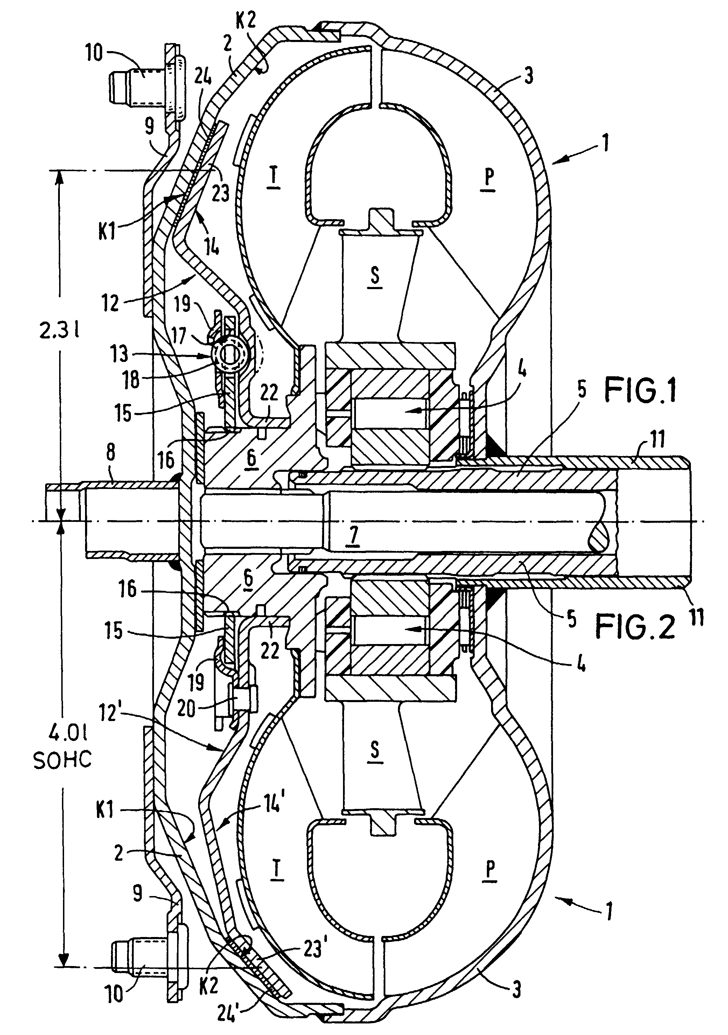

In den beiden Figuren 1 und 2 sind übereinstimmende Bauteile mit den gleichen Bezugszeichen versehen.

In einem Drehmomentwandlergehäuse 1, das in an sich bekannter Weise aus einer Antriebsschale 2 oder einem Mantelbauteil 2 und einem damit verbundenen Pumpenradgehäuse 3 besteht, sind in einem kreisförmigen Strömungskreislauf ein mit einer Vielzahl von Schaufeln versehenes Pumpenrad P, ein Leitrad oder Statorrad S und ein Turbinenrad T angeordnet.

Das Leitrad oder Statorrad S ist in an sich bekannter Weise über eine Freilaufanordnung 4 an einer feststehenden Hohlwelle 5 abgestützt.

Das Turbinenrad T ist hierbei über eine Turbinennabe 6 treibend mit einer Turbinenwelle 7 verbunden, die ein Eingangsglied, z.B. für ein aus mehreren Planetenradsätzen gebildetes automatisches Getriebe eines Kraftfahrzeuges bildet.

Das Drehmomentwandlergehäuse 1 ist mit seinem Mantelbauteil 2, z.B. über eine Zentrierhülse 8 an einer Schwungradanordnung eines Verbrennungsmotors (nicht gezeigt) zentriert und wird von dieser über eine, eine gewisse axiale und radiale Flexibilität sicherstellende Antriebsscheibe 9 über Schraubenbolzen 10 treibend verbunden.

Die andere Seite des Drehmomentwandlergehäuses 1, die von dem Pumpenradbauteil 3 gebildet wird, stützt sich hierbei in bekannter Weise über eine Antriebshohlwelle 11 in einem Lagerabschnitt (nicht gezeigt) des Getriebegehäuses ab, wobei die Antriebshohlwelle 11 gleichzeitig die Antriebsverbindung zu einer für ein automatisches Getriebe erforderlichen Schmiermittelpumpe herstellt.

Um die bei einem hydrokinetischen Drehmomentwandler auch nach Erreichen des Kupplungspunktes auftretenden Schlupfverluste zu eliminieren, ist es seit vielen Jahren bekannt, sogenannte Überbrückungskupplungen anzuordnen, die parallel zum Turbinenrad T eine unmittelbare treibende Verbindung zwischen dem Drehmomentwandlergehäuse 1 und der Turbinennabe 6 herstellen können. Eine solche Überbrückungskupplung ist in Fig. 1 mit 12 und in Fig. 2 mit 12' bezeichnet.

Eine solche Überbrückungskupplungsanordnung 12 oder 12' besteht im wesentlichen aus einer Dämpfungsanordnung 13 und einer Kupplungsscheibe 14 bzw. 14'.

Die Dämpfanordnung 13 besteht im wesentlichen aus einer Basisscheibe 15, die über eine Splinesverzahnung 16 drehfest mit der Turbinennabe 6 verbunden ist. Die Basisscheibe 15 weist eine Vielzahl von Fensteröffnungen 17 auf, in denen tangential angeordnete Schraubenfedern 18 derart angeordnet sind, daß sie abwechselnd mit der Basisscheibe 15 und mit der Kupplungsscheibe 14 bzw. 14' zusammenwirken. Die Federn 18 sind hierbei über eine Deckscheibe 19 gegen Herausfallen gesichert, die über Bolzen 20 drehfest mit der Kupplungsscheibe 14 bzw. 14' verbunden ist. Der innere Bereich der Kupplungsscheiben 14 bzw. 14' besteht aus einem Hülsenansatz 22 bzw. 22', der relativ drehbar auf der Kupplungsnabe angeordnet ist.

Der radiale Außenbereich der Kupplungsscheiben 14 bzw. 14' ist in den abgewinkelten Reibscheibenbereichen 23 und 23' mit einer Auflage von entsprechenden Reibbelägen 24 bzw. 24' versehen.

Gemäß der Erfindung ist nunmehr die Antriebsschale oder das Mantelbauteil 2 mit zumindest zwei konzentrisch zueinanderliegenden Konusflächen K1 und K2 versehen, deren radial innere Konusfläche K1 einen geringeren Verstärkungswinkel und deren radial äußere Konusfläche einen größeren Verstärkungswinkel aufweist, wodurch diese mit Kupplungsscheiben mit unterschiedlicher radialer Erstreckung und unterschiedlicher konischer Abwinkelung zusammenwirken können.

Durch die mit dicken Pfeilen und der Bezeichnung 2,3 L bzw. 4,0 L SOHC bezeichneten Abmessungen wird dargestellt, daß bei Verwendung des gleichen Drehmomentwandlergehäuses nur durch die Verwendung unterschiedlicher Kupplungsscheiben mit einmal geringerer und einmal größerer radialer Erstreckung und einmal geringerer und größerer konusförmiger Abwinkelung eine Baureihe von Drehmomentwandlern geschaffen werden kann, deren Überbrückungskupplung in Konusbauform dem jeweils zu übertragenden Drehmoment unterschiedlicher Verbrennungsmotoren auf einfachste Weise angepaßt werden kann.

Selbstverständlich ist die hierbei im Bereich der Kupplungsscheiben angewendete Dämpfungsvorrichtung nur beispielsweise dargestellt und es sind die verschiedensten, zweckmäßigsten Ausführungsformen solcher Dämpfungseinrichtungen möglich, ohne daß hierbei das Wesentliche der vorliegenden Erfindung beeinträchtigt würde.

## Patentansprüche

1. Drehmomentwandler mit Überbrückungskupplung (12 ; 12') in Konusbauform, mit einer unmittelbar mit einer konischen Innenwandung der Antriebsschale (2) des Drehmomentwandlergehäuses (1) zusammenwirkenden Kupplungsscheibe mit konischem Reibscheibenbereich,
**dadurch gekennzeichnet,** daß
- die Innenwandung der Antriebsschale (2) des Drehmomentwandlergehäuses (1) zumindest zwei konzentrisch zueinander liegende Konusflächen (K1 und K2) aufweist, deren radial innere Konusfläche (K1) mit einem geringeren Verstärkungswinkel und deren radial äußere Konusfläche (K2) mit einem größeren Verstärkungswinkel
- mit Kupplungsscheiben (14 bzw. 14') mit unterschiedlich radialer Erstreckung und unterschiedlich konisch abgewinkelten Reibscheibenbereichen (23 bzw. 23') modular nach Art eines Bausatzes zusammenwirkt.

2. Drehmomentwandler mit Überbrückungskupplung nach Anspruch 1,
**dadurch gekennzeichnet,** daß
- die Kupplungsscheiben (14 und 14') in ihrem Nabenund Dämpferbereich übereinstimmen und nur in ihren konischen Reibscheibenbereichen (23 und 23') unterschiedlich ausgebildet sind.

3. Drehmomentwandler mit Überbrückungskupplung nach Anspruch 1,
**dadurch gekennzeichnet,** daß
- die abgewinkelten Reibscheibenbereiche (23 und 23') in bekannter Weise mit entsprechenden Reibbelägen (24 und 24') versehen sind.

## Claims

1. A torque converter with a cone-type lock-up clutch (12, 12') having a clutch disk with a conical friction disk area cooperating directly with a conical inner wall of the drive shell (2) of the torque converter housing (1),
characterised in that
- the inner wall of the drive shell (2) of the torque converter housing (1) has at least two conical areas (K1 and K2) disposed concentrically of one another, the radially inner conical area (K1) having a relatively small gain angle and the radially outer conical area (K2) having a relatively large gain angle, and
- cooperates as a module, in the manner of an assembly kit, with clutch disks (14 and 14'respectively) having different radial extents and having friction disk areas (23 and 23'respectively) with different cone angles.

2. A torque converter with a lock-up clutch according to claim 1,
characterised in that
- the clutch disks (14 and 14') are the same in their hub and damper region and are only formed differently in their conical friction disk areas (23 and 23').

3. A torque converter with a lock-up clutch according to claim 1,
characterised in that
- the angled friction disk regions (23 and 23') are provided in known manner with suitable friction linings (24 and 24').

## Revendications

1. Convertisseur de couple avec embrayage de pontage conique (12 ; 12'), avec un disque d'embrayage coopérant directement avec une paroi intérieure conique de la coquille d'entraînement (2) du boîtier de convertisseur de couple (1) avec une zone de disque de friction conique, caractérisé en ce que
- la paroi intérieure de la coquille d'entraînement (2) du boîtier de convertisseur de couple (1) présente au moins deux surfaces coniques (K1 et K2), disposées de manière concentrique l'une par rapport à l'autre, dont la surface conique radialement intérieure (K1) présente un angle d'amplification inférieur et dont la surface conique radialement extérieure (K2) présente un angle d'amplification supérieur,
- et coopérant de façon modulaire avec des disques d'embrayage (14 ou 14') présentant des dimensions radiales diverses et des zones de disques de friction à repliements coniques divers (23 ou 23') à la façon d'un ensemble de pièces de construction.

2. Convertisseur de couple avec embrayage de pontage selon la revendication 1, caractérisé en ce que les disques d'embrayage (14 et 14') sont conçus de façon concordante dans leur zone de moyeux et d'amortisseurs et ne se différencient que dans leurs zones de disques de friction coniques (23 et 23').

3. Convertisseur de couple avec embrayage de pontage selon la revendication 1, caractérisé en ce que les zones repliées des disques de friction (23 et 23') sont de façon connue pourvues de revêtements d'adhérence correspondants (24 et 24').
